# EUROPEAN PATENT APPLICATION

(11) **EP 1 437 379 A1**
(43) Date of publication of application: **14.07.2004**
(21) Application number: 03000536.7
(22) Date of filing: 09.01.2003
(51) Int. Cl.: C08K 11/00, C08J 5/18

(54) **Article comprising stretched polymer composition with nanofillers**

(71) Applicant: Borealis Technology Oy, 06101 Porvoo (FI)
(72) Inventor: Ackermans, Nina, 3980 Tessenderlo (BE); Motha, Kshama, 00980 Helsinki (FI); Jääskeläinen, Pirjo, 06150 Porvoo (FI)
(74) Representative: Kador & Partner

(57) **Abstract**

The present invention relates to an article comprising a polymer composition comprising
(A) a polyolefin matrix, and
(B) a nanofiller dispersed in component (A),
which composition has been stretched in at least one direction, to a process for the production of an article comprising producing a polymer composition by dispersing a nanofiller in a polyolefin matrix and stretching the polymer composition in at least one direction and to the use of such an article for food packaging.

## Description

The present invention relates to a polymer article, especially a polymer film, comprising a polymer composition which comprises a polyolefin matrix and a nanofiller dispersed therein, and wherein the composition has been stretched in at least one direction. Furthermore, the present invention relates to a process for the production of such an article as well as the use thereof for food packaging.

The use of polyolefin polymers, in particular polypropylene, in films for packaging applications is well known. Usually, these films are biaxially stretched in order to improve e.g. the mechanical properties of the films.

In packaging applications, in particular in food packaging, the materials used inter alia must have good barrier properties e.g. to moisture, oxygen and aromas such as smells and flavours, to keep the packed products as fresh as possible.

It is known that the barrier properties may be improved by biaxially stretching of the packaging films, however, today's market needs require packaging materials with still higher barriers and for that reason films with coatings such as polyvinylidiene chloride (PVDC) or acrylic coatings, and metallised films, e.g. comprising an aluminium layer, are used. However, a disadvantage of these modified materials used in commodity packaging are their high production costs due to the coating or metallisation. Also recycling of those substrates is problematic.

It is also known that barrier properties, for example oxygen or moisture transfer rates, may be improved by using nanocomposites in film structures.

It is, therefore, an object of the present invention to provide a polymer article, especially a polymer film, with improved barrier properties, in particular improved moisture and oxygen barrier properties.

It is a further object of the invention to provide a polymer article, especially a film, which in addition to improved barrier properties also shows good mechanical properties.

The present invention is based on the finding that such a polymer article can be provided, if it comprises a nanofiller dispersed in a polymer matrix which is then stretched in at least one direction. The barrier properties of the stretched article are unexpectedly improved.

The present invention, therefore, provides an article comprising a polymer composition comprising
(A) a polyolefin matrix, and
(B) a nanofiller dispersed in component (A),
which composition has been stretched in at least one direction.

Preferably, the article according to the present invention is a film. More preferably, the article is a biaxially oriented polypropylene film.

The inventive article, in particular film, has improved barrier properties compared both to a stretched article not comprising nanofillers and to a non-stretched article comprising nanofillers. At the same time, the inventive article has good mechanical properties.

A further advantage of the present invention is that a recyclable substrate (no aluminium, no PVDC) is provided.

The expression "nanofiller" as used herein refers to substances with the ability to disperse in the matrix polymer in such a way that structures in the nanoscale dimension from 1 to 500 nm are observed. Usually, the particles of the nanofiller are dispersed in the polymer matrix so that the maximum thickness of the particles in at least one dimension is 10 nm or less, more preferably 8 nm or less.

Polymer matrices in which a nanofiller is dispersed as described above are usually designated as "nanocomposites". Thus, this term designates a multiphase material where one phase, i.e. the nanofiller, is dispersed in one or more other phases at a nanometer level in such a way that structures in the nanoscale dimension (1 to 500 nm) are observed. However, a nanocomposite material appears homogeneous on a microscopic scale. In the sense of this definition, the polymer composition of the inventive article can also be designated as a nanocomposite.

It is believed that the improvement of the barrier properties in the inventive article is caused by an improvement of the dispersion of the nanofiller particles in the polymer matrix by stretching which, leads to even smaller sized particles and thus to "tortuous path" formation. Where layered materials are used, the stretching improves the exfoliation.

In a preferred embodiment of the present invention, the polymer composition may be biaxially stretched. The biaxial stretching leads to an increase in nanofiller exfoliation and therefore even more improvement in the barrier properties.

In the present invention, as nanofillers, all particulate or layered materials may be used so long as they have the ability to disperse in the matrix polymer to form a nanocomposite. For example, the nanofiller may be an inorganic material such as clay-based layered materials, a conventional filler such as calcium carbonate with suitable particle dimensions, a nanowhisker such as SiC, silica and special compounds such as carbon nanotubes.

In a preferred embodiment, nanofiller (B) is a clay-based layered inorganic, preferably silicate, material or material mixture. Useful clay materials include natural, synthetic and modified filler phyllosilicates. Natural clays include smectite clays, such as montmorillonite, hectorite, mica, vermiculite, bentonite. Synthetic clays include synthetic mica, synthetic saponite, synthetic hectorite. Modified clays include fluoronated montmorillonite and fluoronated mica.

Layered silicates may be made organophilic before being dispersed in the polymer matrix by chemical modification such as by cation exchange treatment using alkyl ammonium or phosphonium cation complexes. Such cation complexes intercalate between the clay layers. Such modified layered silicas are commercially available, e.g. as Cloisite, Nanofill and Nanomer. The modification of layered materials e.g. is described in WO 01/92388, p. 32 to 34, the contents of which is enclosed herein by reference.

The dispersion of the above mentioned layered materials used as nanofillers in the polymer matrix is caused by the delamination or exfoliation of the layers of these materials.

Preferably, in the polymer composition of the inventive article, the nanofiller (B) is present in an amount of 1 to 20 wt.%, more preferably of 2 to 10 wt.% based on the total weight of the polymer composition.

In a further preferred embodiment of the polymer composition of the inventive article, polyolefin matrix (A) is a polypropylene, preferably a propylene homopolymer.

Preferably, the articles have an oxygen transfer rate of less than 1800 cm³/m² /24h, 25µm more preferably less than 1700 cm³/m² / 24h, 25µm still more preferably less than 1650 cm³/m²/ 24h, 25µm.

The articles such as biaxially oriented polypropylene film also preferably have a moisture transfer rate of less than 6g/m² / 24h 25µm more preferably less than 5.5g/m²/ 24h 25µm and still more preferably less than 5g/m²/ 24h 25µm.

Preferably, where polypropylene is used as a matrix polymer, the composition has an MFR₂ (melt flow rate measured with a load of 2.16 kg at 230°C in accordance with ISO 1133) of 0.1 to 100 g/10 min, more preferably of 1 to 20 g/10 min, and most preferably, in particular if the article is a film, of 1 to 4 g/10 min.

In a further preferred embodiment, the polymer composition of the inventive article further comprises:
(C) a compatibilizer.

The term "compatibilizer" means a chemical compound which is compatible with the chemical nature of the nanofiller on the one hand and with the chemical nature of the polyolefin on the other hand so that the dispersion of the nanofiller particles and/or the delamination of the layers of the nanofiller in the matrix polymer is improved.

Usually, polymers, which have functional groups, are used as compatibilizers.

Preferably, the compatibilizer is a polymer, further preferably a polyolefin, comprising functional groups, and still further preferably comprises polar groups. Polar groups are defined as functional groups which comprise at least one element other than carbon and hydrogen.

Examples of such preferred compatibilizers are polyolefins which have been grafted with maleic anhydrid or olefin copolymers which have been produced by polymerising an olefinic monomer with a olefinic comonomer comprising a functional/polar group. Such compatibilizers are commercially available e.g. as Polybond 3200.

It is further preferred that compatibilizer (C) is present in the polymer composition in an amount of 1 to 10 wt.%, more preferably of 2 to 5 wt.% based on the total weight of the polymer composition.

Stretching of a polymer article, in particular a film, is usually done in a commercial continuous process by first extruding of a horizontal flat film onto a cooled coasting roll. The extrudate then is reheated to a temperature above the glass transition temperature T_{g} and below the melting point of the polymer. The warm extrudate then is passed through a longitudinal stretching unit where it is oriented in the machine direction (MD).

After cooling, the film passes through a tenter oven or a frame unit where it is gripped along the edge by clamps. The clamps are mounted on rails on both sides on the tenter frame. The tenter frame has a "V"-shaped configuration. As distance between the rails increases at a constant angle, the film is stretched and becomes oriented in the cross machine or transverse direction (TD).

Preferably, the polymer composition of the inventive article has been stretched with a stretch ratio from 1.1 to 20, more preferably from 2 to 15. If the polymer composition has been biaxially stretched, these preferred ranges apply to both stretching directions More preferably, stretching in the MD is done at a stretching ratio of 3 to 7, preferably 5 to 6 and in the TD is done at a stretching ratio of 6 to 10, more preferably 7 to 9. Stretching in the MD preferably is done at an oven temperature of 110 to 140°C and in the TD is preferably is done at an oven temperature of 150 to 190°C.

It is further preferred that the polymer composition be stretched at a stretching speed of 30 to 1000 m/min.

Further preferred, in particular when stretching is performed on continuous lines the stretching speed is 150 to 800 m/min, more preferably 200 to 500 m/min.

Still further preferred, the polymer composition of the inventive article of the stretching is heat set at a temperature from 100 to 250 °C, more preferably from 120 to 200 °C and still more preferred from 140 to 160°C.

In addition to the components as mentioned, the polymer composition of the present invention may further comprise conventional additives and adjutants such as antioxidants, acid scavengers, resins, mineral fillers, flame retardants, etc..

The present invention also relates to a process for the production of an article comprising producing a polymer composition by dispersing a nanofiller in a polyolefin matrix and stretching the polymer composition in at least one direction.

The dispersion of the nanofiller in the polymer matrix, i.e. the preparation of the nanocomposite may be done using known methods in the art. For example, dispersion of the nanofiller in the matrix polymer may be achieved by melt compounding or in situ polymerisation. The nanocomposite can be added as masterbatch, too.

It is preferred that in the inventive process the nanofiller is dispersed in the polyolefin matrix by melt compounding. The dispersing is preferably done in an extruder.

For example, neat polypropylene, nanofiller and further additives are fed into an extruder where the mixture is molten, blended and thereby homogenized.

After dispersing of the nanofiller in the polymer matrix, the polymer composition is stretched in at least one direction.

The stretched film comprising a polyolefin matrix with nanofiller dispersed therein may also be furnished after stretching with a PVDC or aluminium coating which is applied in a separate coating process. For PVDC the main reason is a further improved aroma and oxygen barrier, and aluminium is a further oxygen barrier and light barrier (to avoid rancidity in fat containing products).

The film may also be furnished with other polymers such as polyolefin layers e.g. to improve sealability. The polymers or polymer mixtures of the individual layers may be co-extruded simultaneously through a flat film die, and the multilayer film is biaxially stretched according to the above mentioned process.

Such a multilayer film can have an ABA structure, i.e. the base layer being surrounded by two identical or different outer layers A. The base layer may contain the nanocomposite mixture and the outer layers would typically be ethylene/propylene random copolymers or ethylene/propylene/butene terpolymers.

An additional oxygen barrier coating/layer may be added as well before or after the stretching.

Furthermore, the present invention relates to the use of the inventive article, especially film, in any of the above-described embodiments for food packaging.

The present invention will now be described by way of example and with reference to the accompanying figures in which:
Figure 1 shows scanning electron micrographs of the cross-section in the transverse direction (a) and the cross-section in the machine direction (b) of the non-stretched compared to the biaxially stretched film sample No. 2.
Figure 2 shows scanning electron micrographs of the cross-section in the transverse direction (a) and the cross-section in the machine direction (b) of the non-stretched compared to the biaxially stretched film sample No. 3.

The micrographs were taken with a magnification of 350.

### Examples

Two formulations incorporating organically modified layered silicates (nanoclays) in a PP homopolymer as matrix were subject to biaxial orientation. The neat PP homopolymer was tested as reference.

### a) Preparation of the samples:

The nanocomposite compounds were prepared via a master batch, which was then diluted in a second compounding step. Both master batches as well as final compounds were made on a Berstoff laboratory extruder-line, with L/D = 33 and 25 mm diameter. The melt temperature in both steps was between 200 and 215°C. The extruder screw speed was 250 rpm.

Table 1 gives the formulations as well as properties measured on the obtained compounds.

**Table 1:**

| | Sample 1 (comp.) | Sample 2 | Sample 3 |
|---|---|---|---|
| Formulation | PP | PP + 5% Nanofiller + 3 % maleic anhydride grafted PP | PP + 5% Nanofiller + 3 % maleic anhydride grafted PP |
| MFR₂ | 2.1 | 3 | 1.8 |
| Melting temperature, °C | 162 | 160.6 | 161 |
| Crystallisation temperature, °C | 110.6 | 115 | 114 |
| | | | |
| Tensile stress at yield, MPa | 35 | 36 | 35.5 |
| Flexural Modulus, MPa | 1780 | 2060 | 1980 |
| Charpy, notched impact at 23°C | 4,2 | 4.7 | 6.5 |
| Heat Distortion temp./B, °C | 90 | 99 | 101 |

The following materials were used:
PP = propylene homopolymer, with
   - MFR₂=2.1
   - Isotacticity Index, measured by FTIR: 95 to 97%,
   - Xylene solubles: 2.5 to 3 wt%,
   - Density = 905 kg/m³
Nanofiller in Sample 2: octadecylamine-treated montmorillonite
Nanofiller in Sample 3: alkyl quaternary ammonium montmorillonite
Compatibilizer: maleic anhydride grafted polypropylene (Polybond 3200)

### Used test methods:

MFR₂ is measured according to ISO 1133; 230°C, 2.16 kg, load.
Tensile stress: ISO 527
Flexural Modulus: ISO 178
Charpy impact strength: ISO 179
Heat distortion temperature: ISO 75
Oxygen permeability was analysed as transfer rate normalised for 25 micron film thickness in accordance with ASTM D 3985.
Moisture permeability was analysed as transfer rate normalised for 25 micron film thickness in accordance with ASTM F 1249.

### b) Preparation of films

The non-oriented films were prepared on a Collins Laboratory cast film line, D=25 mm, melt temperature was 240°C. Original thickness of the formulations subjected to biaxial orientation was 1400 to 1500 µm. Biaxial orientation was carried out on a laboratory scale Karo IV stretch frame in batch mode by stretching a plaque. The stretching time was defined and the stretching speed was calculated accordingly. The stretch ratio was 7*7, stretching speed was 34 m/min and the oven temperature was 165°C. The thickness of the oriented films was 30 to 35 µm.

Table 2 gives details as regards values for oxygen and moisture transfer rates of the tested samples before and after orientation.

**Table 2:**

| Film Sample No. | 1 (comp.) | 2 | 3 |
|---|---|---|---|
| Oxygen transfer rate, normalised for 25 microns, cm³/m²*24h | | | |
| | | | |
| **Non-oriented** | **3790** | **3900** | **3600** |
| **Biaxial-oriented** | **1930** | **1622** | **1657** |
| Moisture transfer rate, normalised for 25 microns, g/m²*24h | | | |
| | | | |
| **Non-oriented** | **9.8** | **12.4** | **12** |
| **Biaxial-oriented** | **6.8** | **4.9** | **4.8** |

The data obtained indicate that permeability properties prior to stretching were worse or similar to neat polymer, whereas after stretching the nanocomposite formulations were better than neat polymer.

Figures 1 and 2 compare non-stretched and stretched films of film samples 2 and 3. Each figure has two micrographs representing cross-sections of the film in transverse and machine direction, respectively. Each micrograph in turn, has 4 strips each of non-stretched and stretched film arranged side by side with one neutral strip in the middle for separation.

In the machine direction samples, one can see particles in the non-stretched strips but less or none in the stretched strips, which indicates improved platelet separation after orientation.

## Claims

1. An article comprising a polymer composition comprising
(A) a polyolefin matrix, and
(B) a nanofiller dispersed in component (A),
which composition has been stretched in at least one direction.

2. Article according to claim 1, wherein the article is a film.

3. Article according to claim 1 or claim 2, wherein the oxygen transfer rate is less than 1800 cm³/m²/24h, 25µm.

4. Article according to any one of the claims 1 to 3, wherein the moisture transfer rate is less than 6g/m²/24h, 25µm.

5. Article according to any of the preceding claims, wherein the polymer composition has been biaxially stretched.

6. Article according to any of the preceding claims, wherein component (B) of the polymer composition is a clay-based layered inorganic material, preferably a layered silicate.

7. Article according to any of the preceding claims, wherein component (B) is present in the polymer composition in an amount of 1 to 20 wt.% based on the total weight of the polymer composition.

8. Article according to any of the preceding claims, wherein component (A) of the polymer composition is a polypropylene, preferably a propylene homopolymer.

9. Article according to any of the preceding claims, wherein the polymer composition further comprises
(C) a compatibilizer.

10. Article according to claim 9, wherein component (C) is a polymer comprising polar groups.

11. Article according to claims 9 or 10, wherein component (C) is present in the polymer composition in an amount of 1 to 10 wt.% based on the total weight of the polymer composition.

12. Article according to any of the preceding claims, wherein the polymer composition has been stretched with a stretch ratio from 1.1 to 20.

13. Article according to claim 12, wherein the stretch ratio is 2 to 15.

14. Article according to any of the preceding claims, wherein the polymer composition has been stretched at a stretching speed of 30 to 1000 m/min.

15. A process for the production of an article comprising producing a polymer composition by dispersing a nanofiller in a polyolefin matrix and stretching the polymer composition in at least one direction.

16. Process according to claim 15, wherein the polymer composition is produced by melt compounding of the polyolefin matrix with the nanofiller.

17. Process according to claim 15 or 16, wherein the machine direction stretching ratio is 3 to 7.

18. Process according to claim 17, wherein the stretching temperature is 110 - 140°C

19. Process according to any one of claims 15 to 18, wherein the transverse direction stretching ratio is 6 to 10.

20. Process according to claim 19, wherein the stretching temperature is 150 - 190°C.

21. Use of an article, according to any of claims 1 to 14 or produced according to any of claims 15 to 20 for food packaging.
